# EUROPEAN PATENT APPLICATION

(11) **EP 4 832 468 A1**
(43) Date of publication of application: **28.10.2026**
(21) Application number: 26173387.7
(22) Date of filing: 20.04.2026
(51) Int. Cl.: H04N 1/00, G06F 3/12, G06F 3/14, G06F 3/048, G06F 3/0481, G06F 3/0484, G06F 16/957, H04N 1/32, H04L 67/10, H04L 67/12

(54) **INFORMATION PROCESSING METHOD, INFORMATION PROCESSING APPARATUS, AND IMAGE FORMING APPARATUS FOR INTERACTIVE MODIFICATION OF AN EXTERNALLY GENERATED CONTENT TO BE DISPLAYED VIA USER OPERATIONS ON SCREEN**

(30) Priority: 23.04.2025 JP 2025071056
(71) Applicant: KYOCERA Document Solutions Inc., Osaka-shi, Osaka 540-8585 (JP)
(72) Inventor: Hirabe, Masato, Osaka-shi, 540-8585 (JP)
(74) Representative: Plougmann Vingtoft a/s

(57) **Abstract**

An information processing method includes displaying, on an operation screen, external content that is generated by an external system on the basis of specific data that is acquired by an information processing apparatus. The information processing method includes, when an operation apparatus detects a specific operation for the external content, causing the external system to generate the external content of which a display mode has been changed according to the specific operation, and displaying the external content after the change on the operation screen.

## Description

### INCORPORATION BY REFERENCE

This application is based upon and claims the benefit of priority from the corresponding Japanese Patent Application No. 2025-071056 filed on April 23, 2025, the entire contents of which are incorporated herein by reference.

The present disclosure relates to an information processing method, an information processing apparatus, and an image forming apparatus that are for displaying an operation screen on a display apparatus.

### BACKGROUND

An information processing apparatus that displays an operation screen provided by a Web server is known as a related technology. In the information processing apparatus, when a "preview" button displayed on the operation screen is operated, a preview image is generated from image data based on file information selected on a file selection screen, and the generated preview image is displayed on the operation screen.

In a configuration provided by the related technology described above, a preview image may be displayed on the operation screen by the information processing apparatus transmitting image data to the server and receiving the preview image (external content) generated by the server (an external system) on the basis of the image data.

### SUMMARY

An information processing method according to an aspect of the present disclosure is an information processing method for controlling display performed on a display apparatus in an information processing apparatus that includes the display apparatus and an operation apparatus. The display apparatus displays thereon an operation screen, and the operation apparatus detects an operation performed on the operation screen. The information processing method includes displaying, on the operation screen, external content that is generated by an external system on the basis of specific data that is acquired by the information processing apparatus. The information processing method includes performing a change process when the operation apparatus detects a specific operation for the external content. The change process is a process that includes causing the external system to generate the external content of which a display mode has been changed according to the specific operation, and displaying the external content after the change on the operation screen.

An information processing apparatus according to another aspect of the present disclosure includes at least one processor that performs the information processing method described above, the display apparatus, and the operation apparatus.

An image forming apparatus according to yet another aspect of the present disclosure includes the information processing apparatus and an image forming section that forms an image on a sheet. An operation that is related to the image forming section and performed on the operation screen is receivable by the operation apparatus.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

Fig. 1 is a block diagram illustrating a configuration of an image forming apparatus according to embodiments;
Fig. 2 illustrates an example of an operation screen displayed by the image forming apparatus according to the embodiments;
Fig. 3 illustrates an example of the operation screen including external content displayed by the image forming apparatus according to the embodiments;
Fig. 4 is a diagram of a sequence of an example of a process of displaying the external content that is performed by the image forming apparatus according to the embodiments;
Fig. 5 is a diagram of a sequence of an example of a process of changing the external content that is performed by the image forming apparatus according to the embodiments;
Fig. 6 illustrates a first example of display of the external content that is performed by the image forming apparatus according to the embodiments;
Fig. 7 illustrates a second example of the display of the external content that is performed by the image forming apparatus according to the embodiments;
Fig. 8 illustrates a third example of the display of the external content that is performed by the image forming apparatus according to the embodiments;
Fig. 9 illustrates a fourth example of the display of the external content that is performed by the image forming apparatus according to the embodiments; and
Fig. 10 illustrates a fifth example of the display of the external content that is performed by the image forming apparatus according to the embodiments.

### DETAILED DESCRIPTION

Embodiments of the present disclosure will now be described below with reference to the drawings. Note that the following embodiments are merely examples in which the present disclosure is embodied, and are not intended to limit the scope of the present disclosure.

### 1. Overall Configuration of Image Forming Apparatus

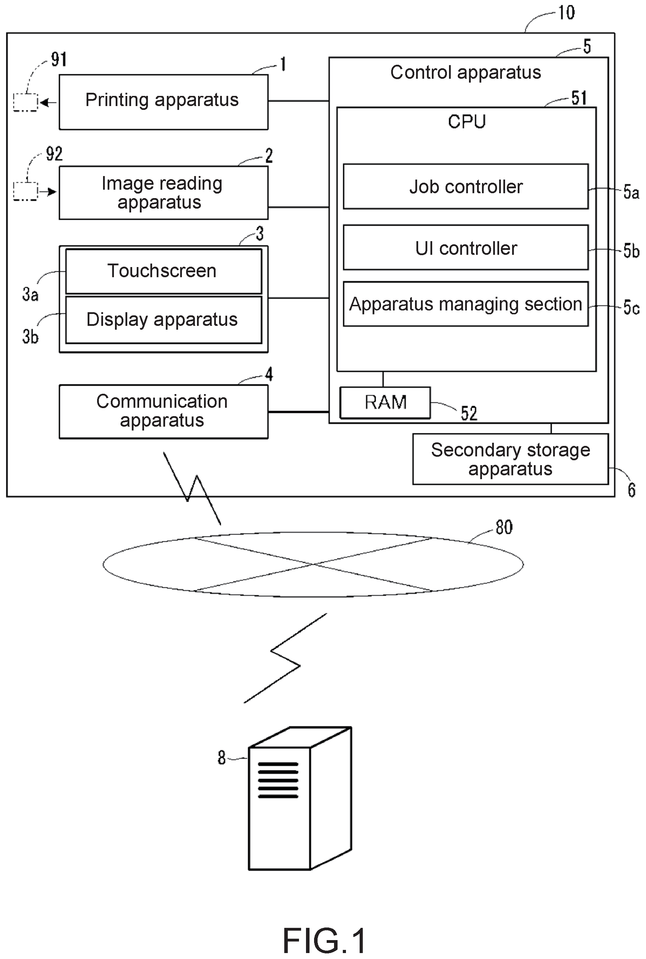

First, an overall configuration of an image forming apparatus 10 according to the present embodiment is described with reference to Fig. 1. As illustrated in Fig. 1, the image forming apparatus 10 includes a printing apparatus 1 that performs a printing process, and a user interface apparatus 3. Here, the printing process is a process of forming an image on a sheet 91. Examples of the image forming apparatus 10 include a printer, a copying machine, a facsimile apparatus, and a multifunctional device.

The user interface apparatus 3 includes a touchscreen 3a that detects touch operations, and a display apparatus 3b that can display thereon an image. The touchscreen 3a is arranged on a screen of the display apparatus 3b. The touchscreen 3a is an example of an operation apparatus that detects operations. The touchscreen 3a may be hereinafter referred to as an "operation apparatus 3a." The image forming apparatus 10 is an example of an information processing apparatus that includes an operation apparatus and the display apparatus 3b.

In the example illustrated in Fig. 1, the image forming apparatus 10 includes the printing apparatus 1, an image reading apparatus 2, the user interface apparatus 3, a communication apparatus 4, a control apparatus 5, and a secondary storage apparatus 6. The image forming apparatus 10 can communicate with an external system 8 through a network 80. The network 80 includes a local area network (LAN) or the Internet.

The external system 8 is an information processing apparatus such as a server, a personal computer ,a tablet computer, or a smartphone. For example, the external system 8 may include a function that is not included in the image forming apparatus 10 serving as an information processing apparatus. In the present embodiment, the external system 8 includes a function to generate a graph image, as described later, where the function is a function that is not included in the image forming apparatus 10. Further, for example, the external system 8 may include the same function as the image forming apparatus 10 serving as an information processing apparatus, and may have a greater processing capability for using the function than the image forming apparatus 10.

The printing apparatus 1 performs a printing process by a predetermined approach such as electrophotography or ink-jetting. The printing apparatus 1 includes a sheet transportation mechanism (not illustrated) that transports the sheet 91, and an image forming section (not illustrated) that forms an image on the transported sheet 91. The printing apparatus 1 performs the printing process based on data of a read image obtained by the image reading apparatus 2 performing reading or based on received printing data. Here, the received printing data is data included in a printing request received from another apparatus such as the external system 8 through the communication apparatus 4.

The image reading apparatus 2 performs an image reading process. Here, the image reading process is a process of reading a document 92 to obtain an image of the document 92. The image reading apparatus 2 includes a light scanning mechanism (not illustrated) that scans light onto the document 92, and an image sensor (not illustrated) that receives reflected light reflected off the document 92. The image sensor outputs data of a read image. Here, the read image is an image obtained by reading the document 92.

The communication apparatus 4 is a communication interface device that communicates with another apparatus such as the external system 8 through the network 80. The control apparatus 5 performs all of data transmission to and all of data reception from the other apparatus through the communication apparatus 4. The communication performed between the communication apparatus 4 and the other apparatus may be wired communication or wireless communication.

Further, the communication apparatus 4 can perform an image transmitting process. Here, the image transmitting process is a process of transmitting, to a destination specified by a user and through the network 80, data of a read image obtained by the image reading apparatus 2 performing reading. In the present embodiment, the image transmitting process includes a network facsimile-transmission process of transmitting data of a read image through the network 80.

The control apparatus 5 performs various computations, various data processes, and control on various electrical apparatuses included in the image forming apparatus 10. Further, the control apparatus 5 controls display performed on the display apparatus 3b by controlling the display apparatus 3b.

The control apparatus 5 includes, for example, a central processing unit (CPU) 51 and a random access memory (RAM) 52. The CPU 51 is at least one processor that executes a computer program to perform various data processes and various controls. Note that at least one another processor such as a digital signal processor (DSP) may perform the data processes and controls described above on behalf of the CPU 51.

The RAM 52 is a computer-readable volatile storage apparatus. The RAM 52 temporarily stores therein, for example, the computer program executed by the CPU 51, and data output and referred to by the CPU 51 during the execution of the computer program.

The secondary storage apparatus 6 is a computer-readable nonvolatile storage apparatus. The secondary storage apparatus 6 can store therein, for example, a computer program and various data. Examples of the secondary storage apparatus 6 include a flash memory such as a solid state drive (SSD), and a hard disk drive.

The control apparatus 5 can perform a data recording process. Here, the data recording process is a process of recording, in the secondary storage apparatus 6, data of a read image obtained by the image reading apparatus 2, or received printing data obtained through the communication apparatus 4.

The CPU 51 includes a plurality of processing modules implemented by the above-described computer program being executed. In the present embodiment, the CPU 51 includes the plurality of processing modules such as a job controller 5a, a user interface (UI) controller 5b, and an apparatus managing section 5c.

The job controller 5a performs a job control. Here, the job control is a process of causing the apparatuses included in the image forming apparatus 10 to perform image processing corresponding to a request input through the touchscreen 3a or the communication apparatus 4. The job controller 5a controls, for example, the printing apparatus 1, the image reading apparatus 2, and the communication apparatus 4. The job controller 5a causes the requested image processing to be performed by a portion of or all of the printing apparatus 1, the image reading apparatus 2, and the communication apparatus 4. Examples of the image processing described herein include the printing process performed by the printing apparatus 1, the image reading process performed by the image reading apparatus 2, the image transmitting process performed by the communication apparatus 4, and the data recording process performed by the control apparatus 5.

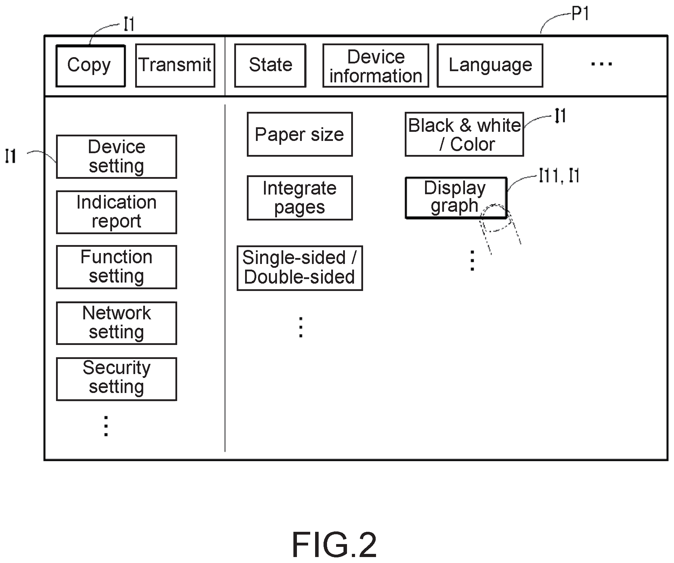

The UI controller 5b can perform a display control process. Here, the display control process is a process of displaying various information related to the image forming apparatus 10 on the display apparatus 3b. In the present embodiment, the UI controller 5b displays, on the display apparatus 3b, an operation screen P1 (refer to Fig. 2) used to input, for example, various settings for the image forming apparatus 10, and instructions given on the job control caused to be performed by the image forming apparatus 10. The operation screen P1 is a user interface implemented by native codes. In other words, the operation screen P1 is implemented by a native application installed upon manufacturing of the image forming apparatus 10. The UI controller 5b displays the operation screen P1 including a plurality of operation icons I1 on the display apparatus 3b, and displays, on the display apparatus 3b, a screen corresponding to an operation of selecting one of the plurality of operation icons I1. In the present embodiment, the operation of selecting one of the plurality of operation icons I1 is detected by the touchscreen 3a serving as an operation apparatus.

Fig. 2 illustrates an example of the operation screen P1 displayed on the display apparatus 3b. As illustrated in Fig. 2, "Copy" and "Transmit" are displayed in an upper portion of the operation screen P1, where "Copy" is the operation icon I1 used to instruct the printing apparatus 1 to perform the printing process and "Transmit" is the operation icon I1 used to instruct the communication apparatus 4 to perform the image transmitting process. Further, "State" and "Device information" are displayed in the upper portion of the operation screen P1, where "State" is the operation icon I1 used to instruct display of a job executed by the image forming apparatus 10 and "Device information" is the operation icon I1 used to instruct display of a state of the image forming apparatus 10. Furthermore, "Language" is displayed in the upper portion of the operation screen P1, where "Language" is the operation icon I1 used to give an instruction on a language used for a text displayed on the operation screen P1.

"Device setting" and "Indication report" are displayed in a left portion of the operation screen P1, where "Device setting" is the operation icon I1 used to give an instruction on various settings for the image forming apparatus 10, and "Indication report" is the operation icon I1 used to instruct display about, for example, an error that occurs in the image forming apparatus 10. Further, "Function setting" and "Network setting" are displayed in the left portion of the operation screen P1, where "Function setting" is the operation icon I1 used to give an instruction on settings for various functions included in the image forming apparatus 10, and "Network setting" is the operation icon I1 used to give an instruction on various settings for the network 80 to which the image forming apparatus 10 is connected. Furthermore, "Security setting" is displayed in the left portion of the operation screen P1, where "Security setting" is the operation icon I1 used to give an instruction on various settings regarding security for the image forming apparatus 10.

"Paper size" and "Integrate pages" are displayed in a right portion of the operation screen P1, where "Paper size" is the operation icon I1 used to give an instruction on a size of the sheet 91, and "Integrate pages" is the operation icon I1 used to give an instruction to perform a page integration process of integrating documents of multiple pages on the sheet 91. Further, "Single-sided / Double-sided" and "Black & white / Color" are displayed in the right portion of the operation screen P1, where "Single-sided / Double-sided" is the operation icon I1 used to instruct single-sided printing or double-sided printing on the sheet 91, and "Black & white / Color" is the operation icon I1 used to instruct black-and-white printing or color printing on the sheet 91.

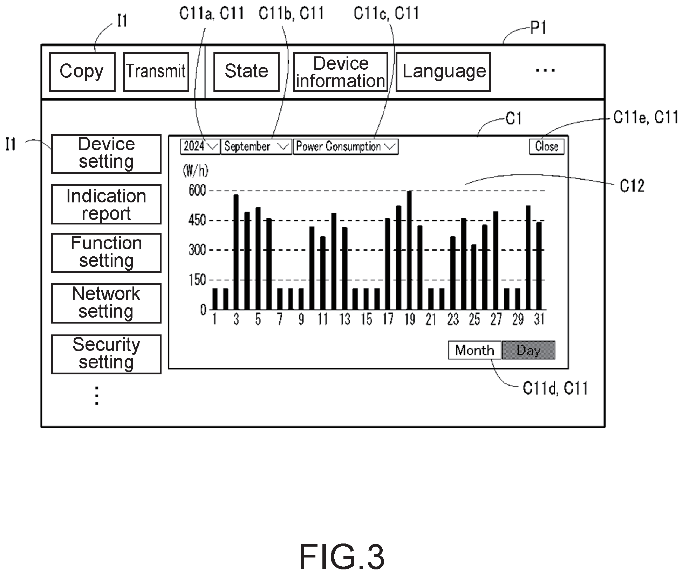

Further, "Display graph" is displayed on the operation screen P1, where "Display graph" is the operation icon I1 used to instruct display of a graph that is external content C1 (refer to Fig. 3) described later. The operation icon I1 used to instruct display of the external content C1 is hereinafter also referred to as an "operation icon I11". Furthermore, in the present embodiment, the operation icon I11 is "Display graph", but of course this is changed according to a mode in which the external content C1 is displayed.

The apparatus managing section 5c determines various states of the image forming apparatus 10, and controls, according to a result of the determination, a state of operation performed by the image forming apparatus 10. Further, the apparatus managing section 5c derives and records, for example, data indicating an operational status of the image forming apparatus 10 including the printing apparatus 1. Here, examples of the data indicating the operational status include power consumption data, consumable consumption data, and data of emissions of greenhouse gases. The pieces of data are described below.

For example, the apparatus managing section 5c determines whether a suspension condition is satisfied. When the suspension condition is satisfied, the apparatus managing section 5c causes the image forming apparatus 10 to change from a normal mode to a power-saving mode in which power consumption is lower than in the normal mode. Here, examples of the suspension condition include performing a specific operation on a power supply switch of the image forming apparatus 10, and a state in which duration period of time for which an operation is continuously not performed on the image forming apparatus 10 is greater than or equal to a specified period of time.

Further, the apparatus managing section 5c derives hourly, daily, and monthly power consumption on the basis of a result of detection performed by a power detecting circuit (not illustrated) included in the image forming apparatus 10, and records, in the secondary storage apparatus 6, power consumption data indicating a result of deriving the power consumption.

Furthermore, the apparatus managing section 5c derives hourly, daily, and monthly consumable consumption on the basis of a result of detection performed by various sensors (not illustrated) included in the image forming apparatus 10, and records, in the secondary storage apparatus 6, consumable consumption data indicating a result of deriving the consumable consumption. Here, examples of the consumable consumption include consumption of developer during the printing process, and the number of the sheets 91 used.

Further, the apparatus managing section 5c converts the derived power consumption and consumable consumption into emissions of greenhouse gases, and records, in the secondary storage apparatus 6, data of hourly, daily, and monthly emissions of greenhouse gases. Examples of the greenhouse gases include carbon dioxide.

An information processing apparatus that displays an operation screen provided by a Web server is known as a related technology. In the information processing apparatus, when a "preview" button displayed on the operation screen is operated, a preview image is generated from image data based on file information selected on a file selection screen, and the generated preview image is displayed on the operation screen.

In a configuration provided by the related technology described above, a preview image may be displayed on the operation screen by the information processing apparatus transmitting image data to the server and receiving the preview image (external content) generated by the server (an external system) on the basis of the image data.

However, in the configuration provided by the related technology described above, external content is generated by an external system. Thus, for example, an information processing apparatus is not allowed to change a display mode of the external content.

On the other hand, in the present embodiment, a process that is described below and performed by an information processing apparatus enables an information processing method, the information processing apparatus, and the image forming apparatus 10 to make it possible to change a display mode of external content.

Specifically, an information processing method according to the present embodiment is a method for controlling display performed on the display apparatus 3b in an information processing apparatus (the image forming apparatus 10) that includes the display apparatus 3b and the operation apparatus 3a, where the display apparatus 3b displays thereon the operation screen P1 and the operation apparatus 3a detects an operation performed on the operation screen P1. Further, the CPU 51 (at least one processor) of the information processing apparatus (the image forming apparatus 10) performs a communication process, a display process, and a change process.

In other words, the information processing apparatus includes the display apparatus 3b displaying thereon the operation screen P1, the operation apparatus 3a detecting an operation performed on the operation screen P1, and at least one processor (the CPU 51) that performs the information processing method described above. Further, the image forming apparatus 10 includes the information processing apparatus described above, and the printing apparatus 1 (an image forming section) forming an image on the sheet 91. Furthermore, the operation screen P1 can receive an operation that is related to the printing apparatus 1 (the image forming section) and performed on the operation screen P1.

The communication process is a process of transmitting, to the external system 8, specific data acquired by the information processing apparatus (the image forming apparatus 10) and receiving the external content C1 generated by the external system 8 on the basis of the specific data. Specifically, the CPU 51 controls the communication apparatus 4 to transmit specific data to the external system 8 through the network 80, and to receive the external content C1 from the external system 8 through the network 80.

Here, the specific data is data indicating an operational status of the image forming apparatus 10, where examples of the data include power consumption data, consumable consumption data, and data of emissions of greenhouse gases that are stored in the secondary storage apparatus 6 of the image forming apparatus 10. Further, the specific data is not limited to the data stored in the secondary storage apparatus 6 of the image forming apparatus 10 in advance, and may be, for example, data acquired by the image forming apparatus 10 in real time. In this case, the specific data is transmitted to the external system 8 without being stored in the secondary storage apparatus 6. Note that the specific data is not limited to the data indicating an operational status of the image forming apparatus 10, and it is only required that the specific data be data held by the image forming apparatus 10.

When the external system 8 receives specific data transmitted by the information processing apparatus (the image forming apparatus 10), the external system 8 generates the external content C1 on the basis of the received specific data. Here, the external content C1 is not content generated by a native application implemented on the image forming apparatus 10, but is content generated by the external system 8. The external content C1 is general-purpose Web content generated using, for example, Hypertext Markup Language (HTML) or a programing language such as Cascading Style Sheets (CSS) or JavaScript.

In the present embodiment, an example of the external content C1 is an image including a bar graph created on the basis of data of power consumption of the image forming apparatus 10. In other words, the external content C1 is a graph image C12 generated on the basis of specific data. More specifically, the external content C1 is a graph image generated on the basis of data, from among the specific data, that is obtained for a specific period of time. For example, the specific period of time is represented on a monthly basis or on an annual basis. Note that it is only required that the external content C1 be in a mode in which the external content C1 can be displayed on the display apparatus 3b, and the external content C1 is not limited to an image including a bar graph.

Here, in the present embodiment, the image forming apparatus 10 serving as an information processing apparatus does not include a specific function to generate an image including a bar graph on the basis of power consumption data and to display the generated image on the display apparatus 3b. In other words, the information processing apparatus (the image forming apparatus 10) does not include a specific function to generate specific content on the basis of specific data. Thus, the information processing apparatus transmits, to the external system 8, specific data (power consumption data) held by the information processing apparatus. Then, the information processing apparatus causes the external system 8 to generate the external content C1 (an image including a bar graph based on power consumption data) on behalf of the image forming apparatus 10 using a specific function held by the external system 8. In other words, the external system 8 includes the specific function, and generates specific content that is the external content C1, on the basis of specific data. This provides an advantage in that content generated using a function that is not included in an information processing apparatus can be displayed on the display apparatus 3b without a native application held by the information processing apparatus being updated.

The display process is a process of displaying, on the operation screen P1, the received external content C1 in a state of overlapping the operation screen P1. In other words, the display process is a process of displaying, on the operation screen P1, the external content C1 generated by the external system 8 on the basis of specific data acquired by an information processing apparatus (the image forming apparatus 10). Specifically, the CPU 51 (in particular, the UI controller 5b) displays, on the display apparatus 3b, the operation screen P1 using a native application that is included in the information processing apparatus (the image forming apparatus 10) in advance. Then, when the external content C1 is received from the external system 8 through the network 80, the CPU 51 displays, on the operation screen P1, the received external content C1 in a state of overlapping the operation screen P1, that is, in a state of being embedded in the operation screen P1. In the present embodiment, the CPU 51 displays the external content C1 on the operation screen P1 using a function to display Web content using a Web browser. In other words, the CPU 51 displays, on the display apparatus 3b, both the operation screen P1 generated using a native application and the external content C1 displayed using a Web browser.

Fig. 3 illustrates an example of the operation screen P1 including the external content C1. The operation screen P1 illustrated in Fig. 3 is displayed after a user operates the operation icon I11 of "Display graph" on the operation screen P1 illustrated in Fig. 2. In the example illustrated in Fig. 3, the external content C1 includes a plurality of operation icons C11 (a first operation icon C11a to a fifth operation icon C11e that are described below) and the graph image C12 showing a bar graph created on the basis of power consumption data. In the example illustrated in Fig. 3, the graph image C12 shows a bar graph indicating daily power consumption of the image forming apparatus 10 in September 2024.

In the example illustrated in Fig. 3, the first operation icon C11a and the second operation icon C11b are displayed in an upper portion of the external content C1, where the first operation icon C11a is used to give an instruction on a display-target year, and the second operation icon C11b is used to give an instruction on a display-target month. Further, the third operation icon C11c is also displayed in the upper portion of the external content C1, where the third operation icon C11c is used to give an instruction on the type of data indicating a display-target operational status. The fourth operation icon C11d is displayed in a lower right portion of the external content C1, where the fourth operation icon C11d is used to instruct one of display of the graph image C12 showing daily power consumption and display of the graph image C12 showing monthly power consumption. The fifth operation icon C11e is displayed in an upper right portion of the external content C1, where the fifth operation icon C11e is used to instruct stop of display of the external content C1.

In the example illustrated in Fig. 3, the external content C1 is displayed on the operation screen P1 to the right of the operation icons I1 including "Device setting" and being arranged vertically in line. Further, the operation icons I1 including "Paper size" and being situated to overlap a display region for the external content C1, is not displayed during display of the external content C1. Note that the external content C1 in a state of overlapping the operation icons I1 including "Paper size" may be displayed on the operation screen P1 without making the operation icons I1 including "Paper size" undisplayed.

The change process is a process performed when the operation apparatus 3a detects a specific operation for the external content C1, the process including causing the external system 8 to generate the external content C1 of which a display mode has been changed according to the specific operation, and displaying the external content C1 after the change on the operation screen P1. Specifically, when the operation apparatus 3a detects a specific operation for the external content C1, the CPU 51 (in particular, the UI controller 5b) transmits, to the external system 8, data used to give an instruction to change the display mode of the external content C1 according to the specific operation. Then, when the external system 8 receives the data, the external system 8 generates the external content C1 of which the display mode has been changed on the basis of the received data, and transmits the generated external content C1 after the change to an information processing apparatus (the image forming apparatus 10). Then, when the information processing apparatus receives the external content C1 after the change, the information processing apparatus displays the received external content C1 after the change on the operation screen P1.

Here, the specific operation includes an operation performed by a user to touch, with his/her fingers, the display region for the external content C1 displayed on the operation screen P1. Particularly in the present embodiment, the specific operation includes an operation performed by the user to touch, with his/her fingers, a display region for the graph image C12 included in the external content C1 displayed on the operation screen P1. An example of displaying the external content C1 after a change performed according to a specific operation will be described in detail in "3. Example of Displaying External Content" described later.

Further, the display mode used herein is not a display mode of an information processing apparatus (the image forming apparatus 10), but a display mode of the external content C1. Furthermore, "changing the display mode of the external content C1" refers to changing how to display specific data in the external content C1 without changing details of the specific data from which the external content C1 is generated. For example, when the graph image C12 based on specific data obtained for a specific period of time is the external content C1, as described later, a change in the specific period of time results in changing how to display the specific data in the graph image C12. In this case, a change in the specific period of time for the graph image C12 corresponds to a change in the display mode of the external content C1.

### 2. Example of Operation Performed by Information Processing Apparatus (Image Forming Apparatus)

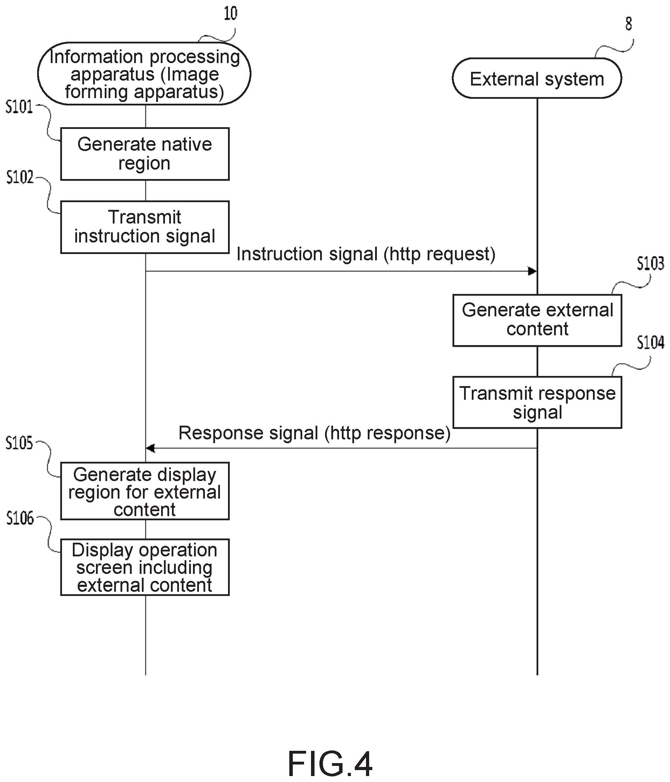

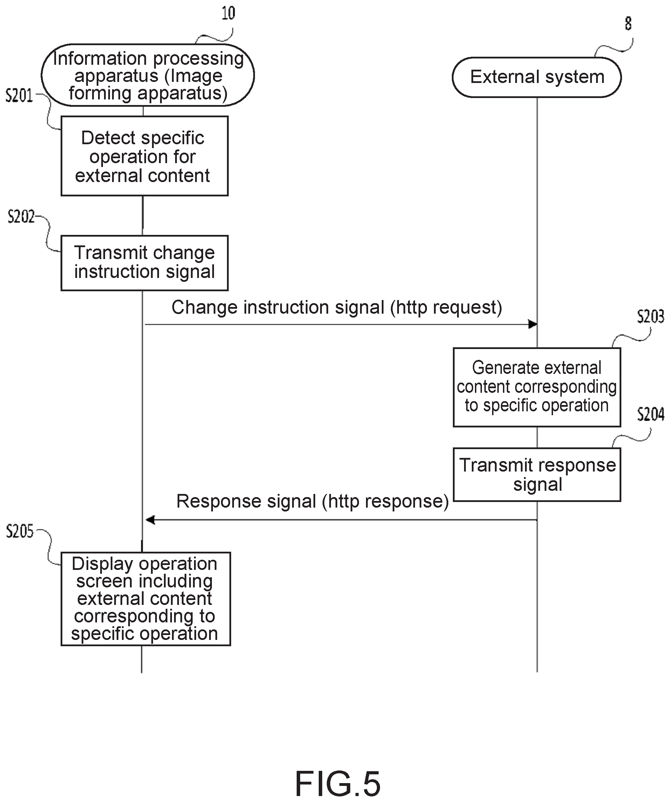

An example of a procedure of processing performed by an information processing apparatus (the image forming apparatus 10) and an example of the information processing method according to the present embodiment are described with reference to Figs. 4 and 5. Here, Steps S101, S102, ... refer to numbers for a processing procedure (Steps) performed by the information processing apparatus or the external system 8.

First, an example of a process of displaying the external content C1 that is performed by the information processing apparatus is described with reference to Fig. 4. For example, this process is started when an instruction to display the external content C1 is given in response to a user operating the operation icon I11 (here, an operation icon of "Display graph") on the operation screen P1.

### Step S101

First, the CPU 51 generates a native region by executing a native application. Here, the native region refers to a display region, on the operation screen P1, that is other than a display region for the external content C1, and refers to a display region in which, for example, the plurality of operation icons I1 displayed on the display apparatus 3b by the native application is situated. For example, the native region is generated by parsing XML content stored in the secondary storage apparatus 6.

### Step S102

Next, the CPU 51 reads specific data from the secondary storage apparatus 6. Further, the CPU 51 controls the communication apparatus 4 to transmit the read specific data and an instruction signal to the external system 8 through the network 80, where the instruction signal includes an instruction to generate the external content C1 that is given to the external system 8. The instruction signal described above is generated using, for example, a Hypertext Transfer Protocols (http) request. Note that the CPU 51 may transmit, to the external system 8 and through the network 80, specific data acquired in real time instead of the specific data read from the secondary storage apparatus 6.

### Step S103

When the external system 8 receives the instruction signal from the information processing apparatus (the image forming apparatus 10) through the network 80, the external system 8 generates the external content C1 on the basis of the specific data included in the instruction signal.

### Step S104

Next, the external system 8 transmits a response signal including the generated external content C1 to the information processing apparatus (the image forming apparatus 10) through the network 80. The response signal described above is generated using, for example, an http response.

### Step S105

When the CPU 51 controls the communication apparatus 4 to receive the response signal transmitted by the external system 8 through the network 80, the CPU 51 generates a display region for the external content C1 included in the response signal. For example, the display region for the external content C1 is generated by parsing the external content C1 using the native application.

### Step S106

Then, the CPU 51 displays, on the display apparatus 3b, the generated native region and the generated display region for the external content C1. This results in displaying, on the display apparatus 3b, the operation screen P1 including the external content C1.

Next, an example of a process of changing the external content C1 that is performed by the information processing apparatus is described with reference to Fig. 5. This process may be performed when the external content C1 is being displayed on the operation screen P1.

### Step S201

First, the operation apparatus 3a detects a specific operation for the external content C1. Specifically, when the user performs a specific operation in the display region for the external content C1, the operation apparatus 3a detects the specific operation.

### Step S202

Next, the CPU 51 generates, according to the specific operation detected by the operation apparatus 3a, a change instruction signal including an instruction to change the display mode of the external content C1. Then, the CPU 51 controls the communication apparatus 4 to transmit the generated change instruction signal to the external system 8 through the network 80. The change instruction signal described above is generated using, for example, an http request.

### Step S203

When the external system 8 receives the change instruction signal from the information processing apparatus (the image forming apparatus 10) through the network 80, the external system 8 generates the external content C1 on the basis of the instruction included in the change instruction signal. Here, the external system 8 does not generate new external content C1, but generates, from the generated external content C1, external content C1 of which the display mode has been changed. Thus, the external system 8 can generate, in a shorter period of time, the external content C1 after the change, compared to when new external content C1 is generated.

### Step S204

Next, the external system 8 transmits a response signal including the generated external content C1 after the change to the information processing apparatus (the image forming apparatus 10) through the network 80. The response signal described above is generated using, for example, an http response.

### Step S205

The CPU 51 controls the communication apparatus 4 to receive the response signal transmitted by the external system 8 through the network 80. Then, the CPU 51 controls the display apparatus 3b to display, in the display region for the external content C1, the external content C1 after the change that is included in the response signal. This results in displaying, on the display apparatus 3b, the operation screen P1 including the external content C1 after the change.

Note that, in the example illustrated in Fig. 5, there is no change in the display region for the external content C1. Thus, the CPU 51 displays the external content C1 after the change in the generated display region without generating the display region for the external content C1 again, although the present disclosure is not limited thereto. For example, when the specific operation includes an operation performed to give an instruction to perform, for example, a change in a position at which the display region for the external content C1 is displayed, or enlargement or reduction in the display region for the external content C1, the CPU 51 may generate the display region for the external content C1 again on the basis of the included operation.

Thereafter, the processes of Steps S201 to S205 described above are performed ever time the user performs a specific operation. This results in updating, in real time and according to the operation performed by the user, the external content C1 displayed on the operation screen P1.

As described above, in the information processing apparatus according to the present embodiment (the image forming apparatus 10), the external content C1 generated by the external system 8 on the basis of specific data held by the information processing apparatus (the image forming apparatus 10) can be displayed on the operation screen P1. Thus, in the information processing apparatus according to the present embodiment, a new function or new information can be added to the operation screen P1 as the external content C1, where it may be difficult to provide the new function depending on the native application. Thus, the information processing apparatus according to the present embodiment provides an advantage in that the operation screen P1 is easily customized in a target apparatus since the operation screen P1 can be customized by the external content C1 without a native application being updated.

Further, in the information processing apparatus according to the present embodiment (the image forming apparatus 10), the external content C1 of which the display mode has been changed according to a specific operation for the external content C1 can be displayed on the operation screen P1 during display of the external content C1 on the operation screen P1. Thus, in the information processing apparatus according to the present embodiment, the display mode of the external content C1 can be changed. Therefore, in the information processing apparatus according to the present embodiment, the display mode of the external content C1 can be flexibly changed according to an operation performed by a user.

Furthermore, the information processing apparatus according to the present embodiment (the image forming apparatus 10) provides an advantage in that a user can easily operate the external content C1 intuitively since the display mode of the external content C1 is changed in real time according to a specific operation for the external content C1 that is performed by the user. Moreover, the information processing apparatus according to the present embodiment (the image forming apparatus 10) provides an advantage in that, for example, when the display mode of the external content C1 is changed such that information that the user wants to acquire from the external content C1 is accentuated, the user can easily grasp the information in a relatively short period of time.

### 3. Examples of Displaying External Content

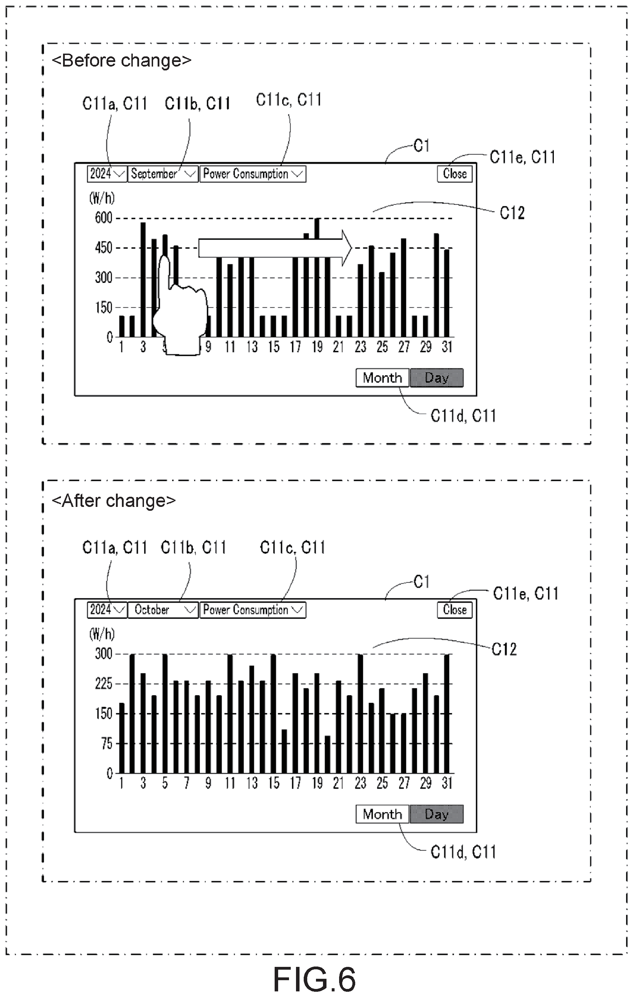

Examples of displaying the external content C1 on the operation screen P1 are described below with reference to Figs. 6 to 10. Each of Figs. 6 to 10 only illustrates the display region for the external content C1, and omits display of a display region, on the operation screen P1, that is other than the display region for the external content C1. Note that first to fifth display examples described below are merely examples of displaying the external content C1 on the operation screen P1, and the example of displaying the external content C1 is not limited to those display examples.

### First Display Example

In the first display example, when the specific operation is a first operation, the CPU 51 displays, on the operation screen P1, the graph image C12 in which a specific period of time has been changed. The first operation is an operation performed to change the specific period of time in the graph image C12 corresponding to the external content C1. This provides an advantage in that a user can change the specific period of time discretionarily and can display, on the operation screen P1, the graph image C12 corresponding to data, from among specific data, that is obtained for a period of time and that the user wants to view.

Fig. 6 illustrates a first example of displaying the external content C1 on the operation screen P1. As illustrated in <Before change> in Fig. 6, the graph image C12 showing power consumption of the image forming apparatus 10 in September 2024 is displayed on the operation screen C1 as the external content C1 before the user performs a specific operation.

Here, for example, the user performs, on the graph image C12, a swiping operation (the first operation) to perform linear movement from left to right. Then, the CPU 51 displays, on the operation screen P1 and as the external content C1, the graph image C12 showing power consumption of the image forming apparatus 10 in October 2024, as illustrated in <After change> in Fig. 6. In other words, in the first display example, the graph image C12 in which the specific period of time has been changed to a period of time of after a month can be displayed on the operation screen P1 every time the user performs the first operation.

Note that, for example, when the user performs, on the graph image C12, a swiping operation (the first operation) to perform linear movement from right to left, the graph image C12 in which the specific period of time has been changed to a period of time of before a month may be displayable on the operation screen P1.

Further, for example, when the user performs, on the graph image C12, a pinch-in operation (the first operation) to perform movement of narrowing a space between two fingers, the graph image C12 in which a unit of specific period of time is made larger may be displayable on the operation screen P1. Specifically, when the user performs the pinch-in operation on the graph image C12 illustrated in <Before change> in Fig. 6, the graph image C12 showing annual power consumption of the image forming apparatus 10 is displayed on the operation screen P1.

Furthermore, the graph image C12 in which the unit of specific period of time is made smaller may be displayable on the operation screen P1 when, for example, the user performs, on the graph image C12, a pinch-out operation (the first operation) to perform movement of broadening a space between two fingers. Specifically, when the user performs the pinch-out operation on the graph image C12 showing annual power consumption of the image forming apparatus 10, the graph image C12 showing monthly power consumption of the image forming apparatus 10 is displayed on the operation screen P1.

Note that each of the first operations described above is an operation performed to perform a specific movement in the graph image C12, although the present disclosure is not limited thereto. For example, the first operation may be a touch operation performed to select any position in the graph image C12.

### Second Display Example

In the second display example, when the specific operation is a second operation, the CPU 51 displays, on the operation screen P1, the graph image C12 including two regions obtained by performing division on the basis of a first value selected by performing the second operation, where one of the two regions is more accentuated than another of the two regions. The second operation is an operation performed to select a numerical value on one of axes in the graph image C12 as the first value. This provides an advantage in that a user can change the first value discretionarily and display, on the operation screen P1, the graph image C12 in which data, from among specific data, that the user wants to view in particular is accentuated.

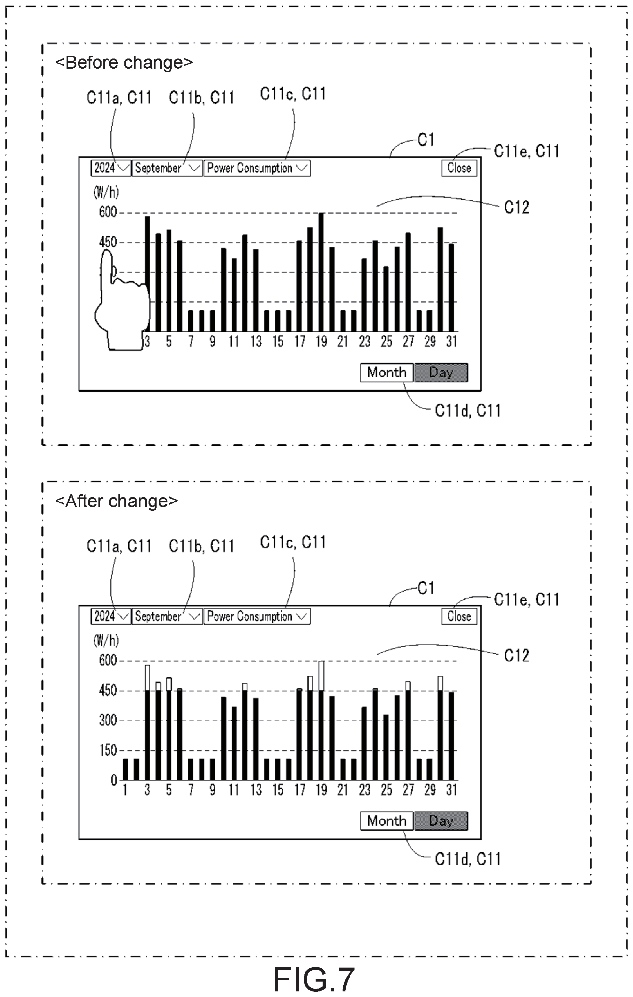

Fig. 7 illustrates a second example of displaying the external content C1 on the operation screen P1. As illustrated in <Before change> in Fig. 7, the graph image C12 showing power consumption of the image forming apparatus 10 in September 2024 is displayed on the operation screen C1 as the external content C1 before the user performs a specific operation.

Here, for example, the user performs, on the graph image C12, a touch operation (the second operation) to select "450W/h" (the first value) on a Y axis. Then, the CPU 51 displays, on the operation screen P1 and as the external content C1, the graph image C12 in which a region (one of the two regions) for greater than or equal to "450W/h" on the Y axis is more accentuated than a region (another of the two regions) for less than "450W/h" on the Y axis, as illustrated in <After change> in Fig. 7. For example, the CPU 51 may perform setting such that bars in the region for greater than or equal to "450W/h" on the Y axis are in a brighter display color (for example, red) than bars in the region for less than "450W/h" on the Y axis. Further, for example, the CPU 51 may hatch the bars in the region for greater than or equal to "450W/h" on the Y axis.

Further, the graph image C12 in which a region for greater than or equal to the first value on an X axis is more accentuated than a region for less than the first value on the X axis may be displayed on the operation screen P1 when, for example, the user performs, on the graph image C12, a touch operation (the second operation) to select any value (the first value) on the X axis.

Note that, in the example illustrated in Fig. 7, the graph image C12 in which the region for greater than or equal to the first value is more accentuated than the region for less than the first value is displayed on the operation screen P1, although the present disclosure is not limited thereto. For example, the graph image C12 in which the region for less than the first value is more accentuated than the region for greater than or equal to the first value may be displayed on the operation screen P1. The region to be accentuated may be switched when, for example, an operation performed by a user to touch the first value twice in a row is detected.

### Third Display Example

In the third display example, when the specific operation is a third operation, the CPU 51 displays, on the operation screen P1, the graph image C12 normalized on the basis of a second value selected by performing the third operation. The third operation is an operation performed to select a numerical value on one of axes in the graph image C12 as the second value. This provides an advantage in that a user can easily compare a plurality of graph images C12 upon performing the comparison, since each of the plurality of graph images C12 is normalized on the basis of the second value.

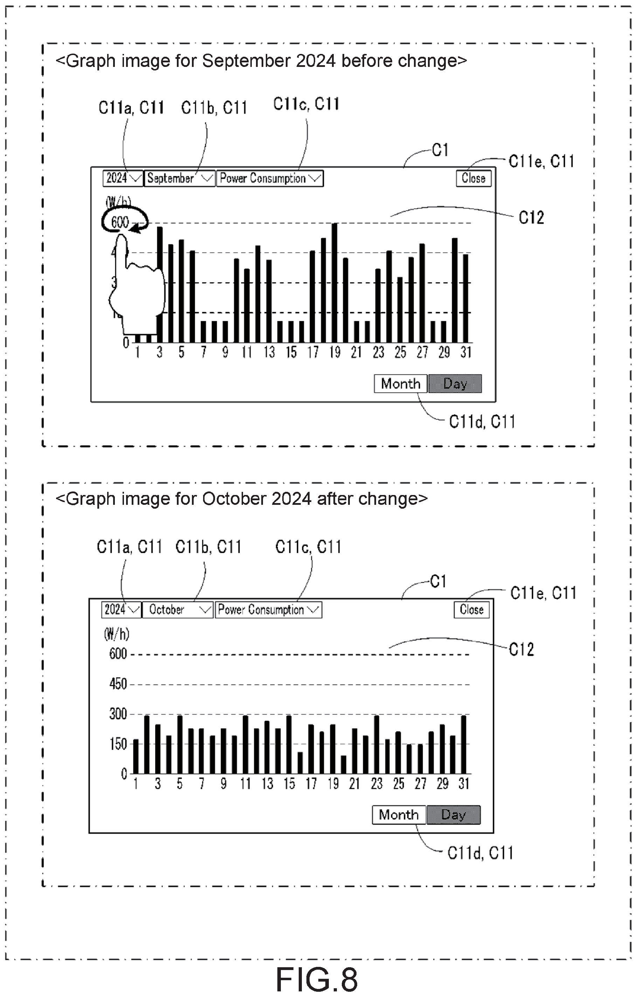

Fig. 8 illustrates a third example of displaying the external content C1 on the operation screen P1. As illustrated in <Graph image for September 2024 before change> in Fig. 8, the graph image C12 showing power consumption of the image forming apparatus 10 in September 2024 is displayed on the operation screen C1 as the external content C1 before the user performs a specific operation.

Here, for example, the user performs, on the graph image C12, a swiping operation (the third operation) to circle "600W/h" (the second value) on a Y axis. Then, the CPU 51 normalizes the graph image C12, with the selected value "600W/h" being set to be a maximum value displayed on the Y axis. Here, in <Graph image for September 2024 before change> in Fig. 8, "600W/h" is already set to be the maximum value displayed on the Y axis before the third operation is performed. Thus, there is no change in the display mode of the graph image C12 for September 2024. On the other hand, in <Graph image for October 2024 after change> in Fig. 8, there a change in the display mode of the graph image C12. Specifically, "300W/h" is set to be the maximum value displayed on the Y axis in the graph image C12 for October 2024 before change, whereas "600W/h" is set to be the maximum value displayed on the Y axis in the graph image C12 for October 2024 after the change.

Note that the CPU 51 may normalize the graph image C12, with a selected second value being set to be a maximum value displayed on an X axis, when, for example, the user performs, on the graph image C12, a swiping operation (the third operation) to circle any value (the second value) on the X axis. Specifically, when, for example, "31st day" is set to be the maximum value on the X axis, the CPU 51 may display "31st day" in a lighter color than other days or does not necessarily have to display the day when the month does not have a day corresponding to "31st day."

### Fourth Display Example

In the fourth display example, when the specific operation is a fourth operation, the CPU 51 displays, on the operation screen P1, the graph image C12 including a result of determining whether data, from among specific data, that corresponds to an axis selected by performing the fourth operation exceeds a third value selected by performing the fourth operation. Here, a report image C13 that reports that the corresponding data exceeds the third value is displayed on the operation screen P1. The fourth operation is an operation performed to select a numerical value on one of axes in the graph image C12 as the third value. This provides an advantage in that a user can easily grasp, in a relatively short period of time, that data exceeds a threshold (the third value), since the report image C13 reports that the data exceeds the threshold.

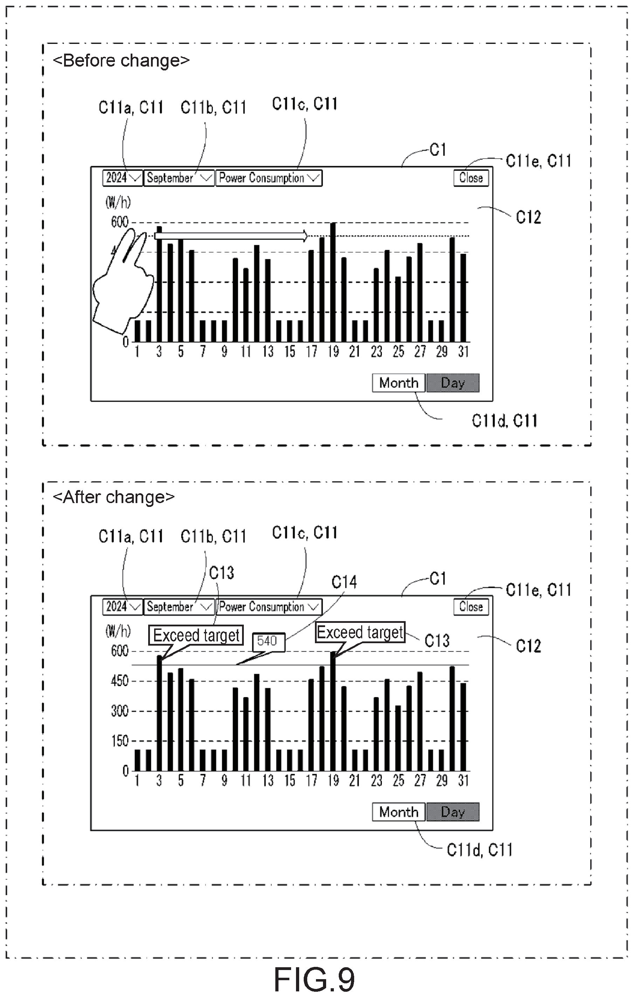

Fig. 9 illustrates a fourth example of displaying the external content C1 on the operation screen P1. As illustrated in <Before change> in Fig. 9, the graph image C12 showing power consumption of the image forming apparatus 10 in September 2024 is displayed on the display apparatus 3b as the external content C1 before the user performs a specific operation.

Here, for example, the user performs, on the graph image C12, a swiping operation (the fourth operation) to touch "450W/h" (the third value) on a Y axis with two fingers and then to perform linear movement from left to right with the two fingers. Then, the CPU 51 accentuates "540W/h" on the Y axis using, for example, a balloon image C14 to display "540W/h" on the operation screen P1, as illustrated in <After change> in Fig. 9. Thereafter, when there is data (here, power consumption of the image forming apparatus 10), from among specific data, that exceeds "540W/h" on the Y axis, the CPU 51 displays, on the operation screen P1, the report image C13 provided using, for example, a balloon image including a message "Exceed target."

For example, data (here, power consumption of the image forming apparatus 10) may exceed the third value when the user performs, on the operation screen P1, an operation to give an instruction to perform a process of performing printing on the sheet 91. In this case, the CPU 51 may also display the report image C13 on the operation screen P1.

Note that the third value (here, "540W/h" on the Y axis) selected by performing the fourth operation does not necessarily have to be displayed on the operation screen P1 in a state of being accentuated.

Further, the fourth operation may be an operation performed to input the third value on a setting screen displayed on the display apparatus 3b by, for example, the user selecting a setting icon provided to the external content C1 in advance and selecting the setting icon.

### Fifth Display Example

In the fifth display example, when the specific operation is a fifth operation, the CPU 51 displays, on the operation screen P1, the external content C1 of which the display mode has been changed according to a parameter set by performing the fifth operation. The fifth operation is an operation performed to set a display-mode-related parameter for the operation screen P1. The parameter is, for example, a threshold for a brightness of the operation screen P1. This provides an advantage in that the visibility of the external content C1 can be improved since the display mode of the external content C1 is changed according to the brightness of the operation screen C1 when, for example, the parameter is a threshold for the brightness of the operation screen P1.

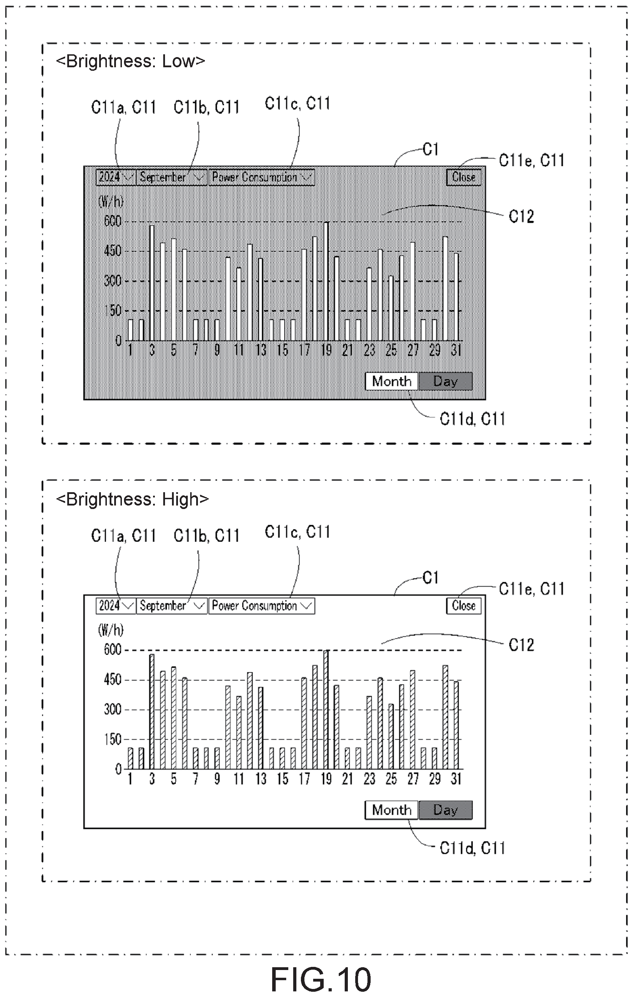

Fig. 10 illustrates a fifth example of displaying the external content C1 on the operation screen P1. For example, it is assumed that an operation (the fifth operation) is performed to input a parameter (here, a threshold for the brightness of the operation screen P1) on a setting screen displayed on the display apparatus 3b by a user selecting a setting icon provided to the external content C1 in advance and selecting the setting icon. Then, the CPU 51 changes a display color of each bar in the graph image C12 according to the set threshold for the brightness of the operation screen P1. Specifically, when the brightness of the operation screen P1 is less than the threshold described above and the operation screen P1 is dark, as illustrated in <Brightness: Low> in Fig. 10, the CPU 51 changes the display color of each bar in the graph image C12 to a brighter color. Further, when the brightness of the operation screen P1 is greater than the threshold described above and the operation screen P1 is bright, as illustrated in <Brightness: High> in Fig. 10, the CPU 51 changes the display color of each bar in the graph image C12 to a darker color.

Note that the parameter settable by performing the fifth operation is not limited to the brightness of the operation screen P1. For example, the parameter may be a threshold for an illumination intensity when the image forming apparatus 10 includes an illumination intensity sensor. In this case, when the illumination intensity detected by the illumination intensity sensor is less than the threshold described above, the CPU 51 changes the display color of each bar in the graph image C12 to a brighter color. Further, when the illumination intensity detected by the illumination intensity sensor is greater than the threshold described above, the CPU 51 changes the display color of each bar in the graph image C12 to a darker color.

### Modifications

In the embodiments described above, the specific operations (the first to fifth operations) described in the first to fifth examples of displaying the external content C1 are merely examples, and the operation mode is not limited to these specific operations. In other words, the specific operation in each of the first to fifth display examples may be in any operation mode that can be distinguished from operation modes of the specific operations in the other display examples.

In the embodiments described above, the external content C1 is content generated by the external system 8 using a function that is not included in a target apparatus (the image forming apparatus 10), although the present disclosure is not limited thereto. For example, the external content C1 may be content generated by the external system 8 using a function that is included in the target apparatus. Specifically, the target apparatus includes a specific function to generate, using power consumption data, an image including a bar graph, but in some cases, the target apparatus does not have a sufficient processing capability to perform the specific function. In such a case, the external system 8 including the specific function and having a greater processing capability than the target apparatus is caused to perform the specific function and to generate the image. This makes it possible to display the image on the operation screen P1 more promptly, compared to when the image is generated by the target apparatus.

Further, in the embodiments described above, the external content C1 may include, for example, content that can be simply displayed using a Web browser and that is not content generated on the basis of specific data.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. An information processing method for controlling display performed on a display apparatus (3b) in an information processing apparatus (10) that includes the display apparatus (3b) and an operation apparatus (3a), the display apparatus (3b) displaying thereon an operation screen (P1), the operation apparatus (3a) detecting an operation performed on the operation screen (P1), the information processing method comprising:
displaying, on the operation screen (P1), external content (C1) that is generated by an external system (8) on a basis of specific data that is acquired by the information processing apparatus (10); and
when the operation apparatus (3a) detects a specific operation for the external content (C1), performing a change process that includes causing the external system (8) to generate the external content (C1) of which a display mode has been changed according to the specific operation, and displaying the external content (C1) after the change on the operation screen (P1).

2. The information processing method according to claim 1, wherein
the external content (C1) is a graph image (C12) that is generated on a basis of data, from among the specific data, that is obtained for a specific period of time, and
when the specific operation is a first operation performed to change the specific period of time in the graph image (C12), the graph image (C12) in which the specific period of time has been changed is displayed on the operation screen (P1) by the change process.

3. The information processing method according to claim 1 or 2, wherein
the external content (C1) is a graph image (C12) that is generated on the basis of the specific data, and
when the specific operation is a second operation performed to select a numerical value on one of axes in the graph image (C12) as a first value, the graph image (C12) including two regions obtained by performing division on a basis of the first value is displayed on the operation screen (C1) by the change process, the one of the two regions being more accentuated than another of the two regions.

4. The information processing method according to any one of claims 1 to 3, wherein
the external content (C1) is a graph image (C12) that is generated on the basis of the specific data, and
when the specific operation is a third operation performed to select a numerical value on one of axes in the graph image (C12) as a second value, the graph image (C12) normalized on a basis of the second value is displayed on the operation screen (P1) by the change process.

5. The information processing method according to any one of claims 1 to 4, wherein
the external content (C1) is a graph image (C12) that is generated on the basis of the specific data, and
when the specific operation is a fourth operation performed to select a numerical value on one of axes in the graph image (C12) as a third value, the graph image (C12) including a result of determining whether data, from among the specific data, that corresponds to the one of the axes exceeds the third value is displayed on the operation screen (P1) by the change process.

6. The information processing method according to any one of claims 1 to 5, wherein
when the specific operation is a fifth operation performed to set a display-mode-related parameter for the operation screen (P1), the external content (C1) of which a display mode has been changed according to the parameter is displayed on the operation screen (P1) by the change process.

7. The information processing method according to any one of claims 1 to 6, wherein
the information processing apparatus (10) does not include a specific function to generate specific content on the basis of the specific data, and
the external system (8) includes the specific function and generates the specific content as the external content (C1) on the basis of the specific data.

8. An information processing apparatus (10), comprising:
at least one processor that performs the information processing method according to any one of claims 1 to 7;
the display apparatus (3b); and
the operation apparatus (3a).

9. An image forming apparatus (10), comprising:
the information processing apparatus (10) according to claim 8; and
an image forming section (1) that forms an image on a sheet, wherein
an operation that is related to the image forming section (1) and performed on the operation screen (P1) is receivable by the operation apparatus (3a).
